# EUROPÄISCHE PATENTSCHRIFT

(11) **EP 3 160 684 B1**
(45) Veröffentlichungstag und Bekanntmachung des Hinweises auf die Patenterteilung: **24.01.2018**
(21) Anmeldenummer: 15731330.5
(22) Anmeldetag: 24.06.2015
(51) Int. Cl.: B23Q 11/10, B28D 7/02

(54) **AUTOMATISCHE REGELUNG VON AGGREGATEN EINER WASSERVERSORGUNGSANLAGE**
AUTOMATIC ADJUSTMENT OF AGGREGATES IN A WATER SUPPLY INSTALLATION
RÉGULATION AUTOMATIQUE DE GROUPES D'UNE INSTALLATION D'ALIMENTATION EN EAU

(30) Priorität: 25.06.2014 EP 14173823
(43) Veröffentlichungstag der Anmeldung: 03.05.2017
(73) Patentinhaber: Hilti Aktiengesellschaft, 9494 Schaan (LI)
(72) Erfinder: RUPPRECHT, Hans, 81477 München (DE); SPECHT, Helmut, 86825 Bad Wörishofen (DE); SEVER, Eduard, A-6713 Ludesch (AT)
(86) Internationale Anmeldenummer: PCT/EP2015/064209
(87) Internationale Veröffentlichungsnummer: WO 2015/197667

(56) Entgegenhaltungen:
- EP-A1- 2 335 897
- DE-A1-102006 035 345
- JP-A- H03 221 348

## Beschreibung

Die vorliegende Erfindung bezieht sich auf ein Verfahren zum Steuern einer Wasserversorgungsanlage zur Verwendung mit einer Werkzeugmaschine, insbesondere einer Kernbohrmaschine, enthaltend ein Gehäuse mit wenigstens einer Schnittstelle zur Versorgung der Werkzeugmaschine mit elektrischer Spannung, einen Wasserspeicher zur Aufbewahrung von Wasser positionierbar in dem Gehäuse, wenigstens eine Leitung zum Transport von Wasser aus dem Wasserspeicher zu der Werkzeugmaschine, wenigstens eine Pumpeneinrichtung zur Förderung von Wasser von dem Wasserspeicher zu der Werkzeugmaschine, eine Strommesseinrichtung zum Messen des Motorstroms an der Werkzeugmaschine, eine Wasserdruckmesseinrichtung zum Messen eines Wasserdrucks in der Leitung und eine Steuerungseinrichtung.

Wasserversorgungsanlagen (zu Wasserversorgungsanlagen zählen auch Wasseraufbereitungsanlagen bzw. Wasserrecyclinganlagen) sind eine wesentliche und unverzichtbare Notwendigkeit bei nahezu jeder Kernbohrarbeit sowie auch bei zahlreichen anderen Arbeiten mit großen Werkzeugmaschinen. Anstelle eine Kernbohrmaschine an eine Frischwasserleitung anzuschließen, die die Bohrkrone bei der Bearbeitung des Werkstoffs kühlt und insbesondere das durch die Bohrkrone gelöste Gestein sowie den Staub irgendwohin wegschwämmt, bietet eine Wasserversorgungsanlage einen Wasservorrat zum Kühlen und Spülen. Eine als Wasseraufbereitungsanlage ausgestaltete Wasserversorgungsanlage bietet auch die Möglichkeit einen bestimmten Wasservorrat in einer sog. Endlosschleife kontinuierlich wiederzuverwenden. Die als Wasseraufbereitungsanlage ausgestaltete Wasserversorgungsanlage verfügt hierzu jeweils über einen Frischwasserspeicher, in dem eine bestimmte Menge an Wasser zum Kühlen und Spülen aufbewahrt ist. Die Wasseraufbereitungsanlage verfügt darüber hinaus noch über einen Bohrschlammspeicher, in dem der durch Gestein, Staub und Wasser entstandene Bohrschlamm aufgefangen wird. Das Wasser kann hierbei mittels eines entsprechenden Filters aus dem Bohrschlamm gefiltert und wieder dem Frischwasserspeicher zugeführt werden, von dem aus es dem Kernbohrgerät und der Bohrkrone erneut zugeführt werden kann.

Eine Wasserversorgungsanlage zur Verwendung mit einer Werkzeugmaschine, wie z.B. einer Kernbohrmaschine, gemäß dem Stand der Technik ist beispielsweise in der deutsche Patentanmeldung DE 10 2006 035 345 A1 offenbart.

Kernbohrarbeiten sind komplex und verlangen bei der Vorbereitung sowie bei der gesamten Durchführung des eigentlichen Bohrvorgangs eine ständige Überwachung und Anpassung diverser Parameter. Unter anderem muss der Getriebegang des Kernbohrgeräts, die Bohrgeschwindigkeit, das Drehmoment, der Bohrfortschritt sowie die Wassermenge, die zum Kühlen und Spülen benötigt wird, gewechselt bzw. eingestellt werden. Bei einer Wasseraufbereitungsanlage ist insbesondere die Einstellung der geförderten Wassermenge zum Kühlen und Spülen eine aufwendige Angelegenheit, die den Anwender oftmals dazu veranlasst den eigentlichen Bohrvorgang zu unterbrechen oder mindestens nicht so effizient und schnell durchzuführen, wie es unter optimalen Bedingungen möglich wäre. Darüber hinaus kann es vorkommen, dass der Kernbohrvorgang bewusst durch den Anwender kurzzeitig unterbrochen werden soll. Ein derartiges Unterbrechen muss nicht nur das Kernbohrgerät verlangsamt und abgeschaltet werden, sondern auch die Wasseraufbereitungsanlage abgeschaltet bzw. die geförderte Wassermenge reduziert werden. Die gleichzeitige Handhabung aller dieser Einstellungen bzw. Anpassungen an dem Kernbohrgerät und an der Wasseraufbereitungsanlage können den Anwender leicht überfordern, sodass Fehler in der Bedienung und/oder Beschädigungen an dem zu bearbeiten Werkstoff oder der Ausrüstung entstehen können.

Des Weiteren ist zu beachten, dass eine Wasserversorgungsanlage, und insbesondere in der Ausgestaltung als Wasseraufbereitungsanlage, einen relativ hohen Energieverbrauch aufweist, da oftmals während des gesamten Kernbohrvorgangs alle Aggregate bzw. elektrisch betriebene Komponenten in Bereitschaft gehalten werden und damit elektrischen Strom konsumieren.

Es ist daher Aufgabe der vorliegenden Erfindung die vorstehend beschriebenen Probleme zu lösen und insbesondere ein Verfahren zum Steuern einer Wasserversorgungsanlage zur Verwendung mit einer Werkzeugmaschine, insbesondere einer Kernbohrmaschine, zur Verfügung zu stellen, mit dem einerseits die Handhabung eines Kernbohrvorgangs erleichtert werden kann und mit dem andererseits der Energieverbrauch einer Wasserversorgungsanlage sowie deren Aggregate effizient gesteuert werden kann.

Diese Aufgabe wird erfindungsgemäss durch den Gegenstand des unabhängigen Anspruchs 1 gelöst.

Hierzu wird ein Verfahren bereitgestellt zum Steuern einer Wasserversorgungsanlage zur Verwendung mit einer Werkzeugmaschine, insbesondere einer Kernbohrmaschine, enthaltend ein Gehäuse mit wenigstens einer Schnittstelle zur Versorgung der Werkzeugmaschine mit elektrischer Spannung, ein Wasserspeicher zur Aufbewahrung von Wasser positionierbar in dem Gehäuse, wenigstens eine Leitung zum Transport von Wasser aus dem Wasserspeicher zu der Werkzeugmaschine, wenigstens eine Pumpeneinrichtung zur Förderung von Wasser von dem Wasserspeicher zu der Werkzeugmaschine, eine Strommesseinrichtung zum Messen des Motorstrom an der Werkzeugmaschine, eine Wasserdruckmesseinrichtung zum Messen eines Wasserdrucks in der Leitung und eine Steuerungseinrichtung.

Das Verfahren kennzeichnet sich erfindungsgemäß durch die Schritte:
- Aktivierung der Pumpeneinrichtung zur Förderung von Wasser von dem Wasserspeicher zu der Werkzeugmaschine in dem Fall, dass die Werkzeugmaschine mit der Schnittstelle verbunden ist und der Motorstrom der Werkzeugmaschine einen vorbestimmen Schwellwert übersteigt; sowie
   - Deaktivierung der Pumpeneinrichtung zur Förderung von Wasser von dem Wasserspeicher zu der Werkzeugmaschine in dem Fall, dass die Werkzeugmaschine mit der Schnittstelle verbunden ist und der Motorstrom der Werkzeugmaschine einen vorbestimmen Schwellwert unterschreitet; oder
- Aktivierung der Pumpeneinrichtung zur Förderung von Wasser von dem Wasserspeicher zu der Werkzeugmaschine in den Fall, dass die Werkzeugmaschine nicht mit der Schnittstelle verbunden ist und ein Wasserdruck in der Leitung einen vorbestimmen Schwellwert unterschreitet; sowie
   - Deaktivierung der Pumpeneinrichtung zur Förderung von Wasser von dem Wasserspeicher zu der Werkzeugmaschine in den Fall, dass die Werkzeugmaschine nicht mit der Schnittstelle verbunden ist und ein Wasserdruck in der Leitung einen vorbestimmen Schwellwert überschreitet. Hierdurch kann die Bedienung der Pumpeneinrichtung bzw. der Wasserversorgungsanlage ferngesteuert betrieben werden, ohne dass der Anwender die Werkzeugmaschine verlassen muss. Darüber hinaus wird die Pumpeneinrichtung der Wasseraufbereitungsanlage entsprechend der Art, wie die Kernbohrmaschine mit elektrischer Spannung versorgt wird, nur dann aktiviert bzw. betrieben, wenn auch wirklich Wasser zum Kühlen bzw. Spülen an der Werkzeugmaschine benötigt wird.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination.

Es zeigen:
- Fig.: 1 eine schematische Darstellung einer als Wasseraufbereitungsanlage ausgestaltete Wasserversorgungsanlage und einer Kernbohrmaschine zur Durchführung des erfindungsgemäßen Verfahrens zum Steuern der Wasseraufbereitungsanlage mit der Versorgung der Kernbohrmaschine über die Schnittstelle an dem Gehäuse der Wasseraufbereitungsanlage; und

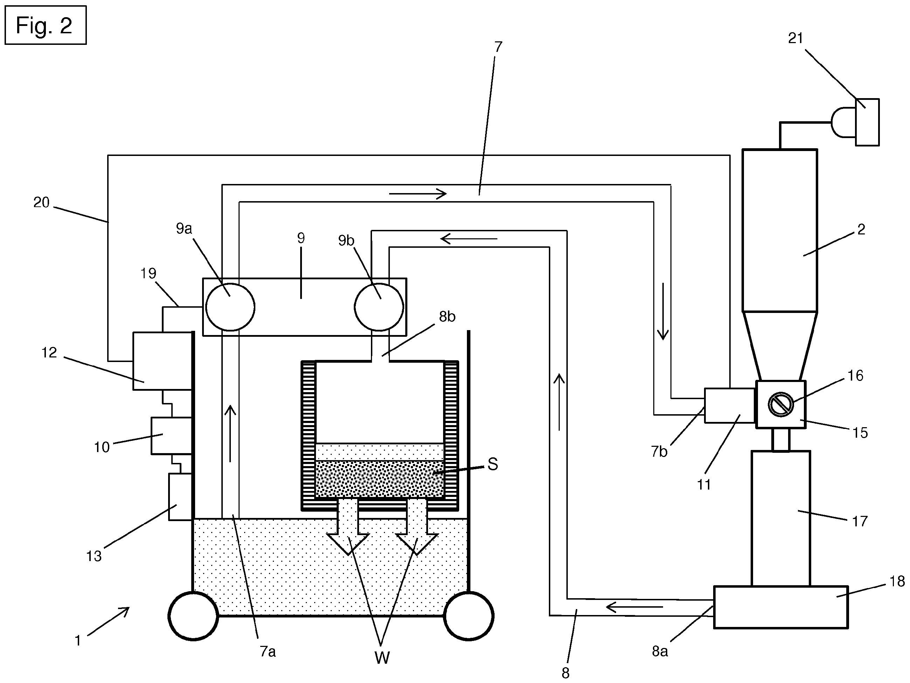

- Fig. 2 eine: schematische Darstellung einer als Wasseraufbereitungsanlage ausgestaltete Wasserversorgungsanlage und einer Kernbohrmaschine zur Durchführung des erfindungsgemäßen Verfahrens zum Steuern der Wasseraufbereitungsanlage mit der Versorgung der Kernbohrmaschine über eine separate Schnittstelle.

### Ausführungsbeispiel:

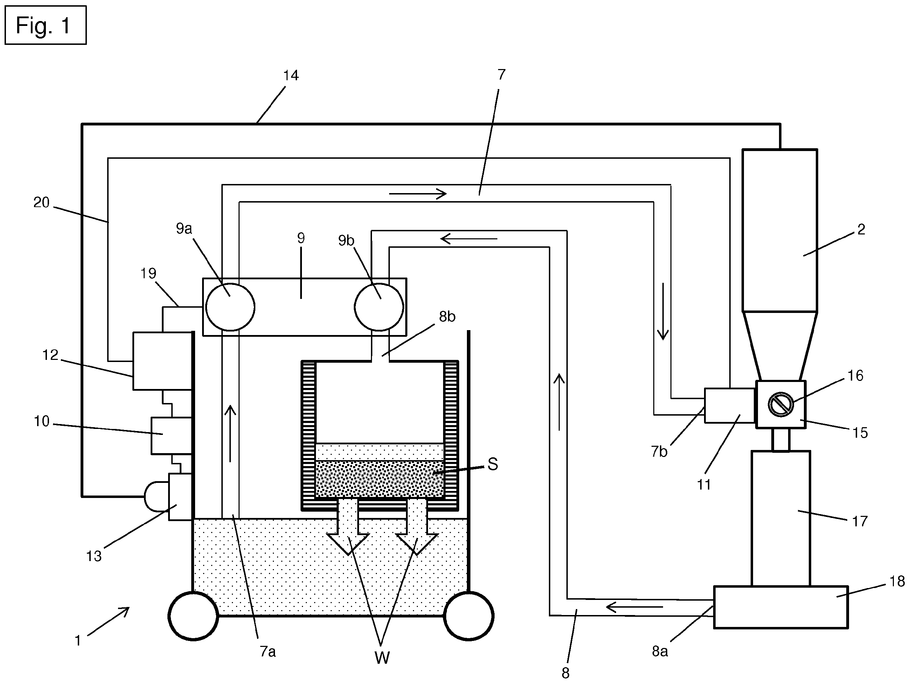

Fig. 1 und Fig. 2 zeigen eine als Wasseraufbereitungsanlage ausgestaltete Wasserversorgungsanlage 1, welche mit einer als Kernbohrmaschine ausgestalteten Werkzeugmaschine 2 verbunden ist. Die Kernbohrmaschine 2 ist mit einem als Bohrkrone ausgestalteten Werkzeug 17 verbunden. Die als Wasseraufbereitungsanlage ausgestaltete Wasserversorgungsanlage 1 ist zur Durchführung des erfindungsgemäßen Verfahrens ausgestaltet.

Die Wasseraufbereitungsanlage 1 enthält im Wesentlichen ein Gehäuse 3, einen Wasserspeicher 4, eine Bohrschlammspeicher 5, einen Filter 6, eine erste Leitung 7, eine zweite Leitung 8, eine Pumpeneinrichtung 9, eine Strommesseinrichtung 10, eine Wasserdruckmesseinrichtung 11 und eine Steuerungseinrichtung 12.

Gemäß einer alternativen und nicht dargestellten Ausführungsform kann die Wasserversorgungsanlage als reine Versorgungsanlage ohne Wasseraufbereitungsfunktion bzw. ohne Wasserrecyclingfunktion ausgestaltet sein, die lediglich einen bestimmten Wasservorrat einer angeschlossenen Werkzeugmaschine (wie z.B. einer Kernbohrmaschine) zum Kühlen und Spülen zur Verfügung stellt. Eine derartige Wasserversorgungsanlage ohne Wasseraufbereitungsfunktion bzw. ohne Wasserrecyclingfunktion enthält dabei keinen Bohrschlammspeicher und keine zweite Leitung, mit der Bohrschlamm von der Werkzeugmaschine zu dem Bohrschlammspeicher transportiert werden kann. Alternativ dazu kann auch eine Wasserversorgungsanlage vorgesehen sein, die einen Bohrschlammspeicher und eine zweite Leitung zum Transport von Bohrschlamm von der Werkzeugmaschine zu dem Bohrschlammspeicher enthält, bei der jedoch die Wasseraufbereitungsfunktion bzw. Wasserrecyclingfunktion deaktivierbar ist. Mit anderen Worten, die nachfolgend beschrieben Wasserversorgungsanlage mit Wasseraufbereitungsfunktion bzw. Wasserrecyclingfunktion kann auch so betrieben werden, dass lediglich das Frischwasser aus dem Wasserspeicher an die Bohrkrone zum Kühlen und Spülen gepumpt wird, ohne jedoch das Wasser aus dem Bohrschlamm zurückzugewinnen und erneut (d.h. in einer kontinuierlichen Schleife) an die Bohrkrone zu transportieren. Die nachfolgend beschrieben Wasserversorgungsanlage kann sowohl mit Wasseraufbereitungsfunktion bzw. Wasserrecyclingfunktion als auch ohne Wasseraufbereitungsfunktion bzw. Wasserrecyclingfunktion betrieben werden.

Das Gehäuse 3 ist im Wesentlichen als Hohlkörper ausgestaltet. Darüber hinaus enthält das Gehäuse 3 an einer Außenseite eine Schnittstelle 13 zur Versorgung mit elektrischer Spannung.

Über die Schnittstelle 13 kann die Kernbohrmaschine 2 mittels einer Stromleitung 14 zur Versorgung mit elektrischer Spannung mit der Wasseraufbereitungsanlage 1 verbunden sein.

In dem Gehäuse 3 ist sowohl der Wasserspeicher 4 als auch der Bohrschlammspeicher 5 positioniert.

Der Wasserspeicher 4 dient dazu einen Vorrat an Frischwasser zum Kühlen und Spülen aufzubewahren.

Der Bohrschlammspeicher 5 ist im Wesentlichen in Form eines zylindrischen Behälters ausgestaltet. Die Seitenwände sowie der Boden sind als Filter 6 ausgebildet und bestehen daher aus einen filterartigen Material, welches dazu geeignet ist, den Bohrschlamm S zurückzuhalten und lediglich Wasser W durchdringen zu lassen. Der Bohrschlammspeicher 5 und der Wasserspeicher 4 sind insbesondere so zueinander positioniert, dass das Wasser, welches aus dem Filter 6 des Bohrschlammspeichers 5 austritt, in dem Wasserspeicher 4 aufgefangen wird. Wie in Fig. 1 und 2 dargestellt, befindet sich der Bohrschlammspeicher 5 oberhalb des Wasserspeichers 4.

Die erste Leitung 7 ist in Form eines flexiblen Schlauchs ausgestaltet und enthält ein erstes Ende 7a sowie ein zweites Ende 7b. Das erste Ende 7a der ersten Leitung 7 ragt in den Wasserspeicher 4 hinein. Das zweite Ende 7a der ersten Leitung 7 ist mit einem Verbindungsstück 15 an der Kernbohrmaschine 2 verbunden. Das Verbindungsstück 15 enthält ein Ventil 16, mit dem der Durchfluss durch die erste Leitung 7 geöffnet und geschlossen werden kann. Die geöffnete Stellung des Ventils 16 dient dazu, dass Wasser durch die erste Leitung 7 zu dem als Bohrkrone ausgestalteten Werkzeug 17 gelangen kann. Die geschlossene Stellung des Ventils 16 dient dazu, dass kein Wasser durch die erste Leitung 7 zu der Bohrkrone 17 gelangen kann. Die erste Leitung 7 dient zum Transport von Frischwasser aus dem Wasserspeicher 4 zu der Bohrkrone 17. Wie in Fig. 1 und 2 gezeigt, ist die erste Leitung 7 so über das Verbindungsstück 15 mit der Kernbohrmaschine 2 verbunden, dass das Wasser in das Innere der Bohrkrone 17 gelangt. Das Wasser kühlt und spült die Bohrkrone 17 während eines Bohrvorgangs. Entsprechend einer alternativen Ausgestaltung kann auch vorgesehen sein, dass die erste Leitung 7 zuerst zur Kühlung durch die Kernbohrmaschine 2 geführt wird, bevor es schließlich zum Kühlen und Spülen in die Bohrkrone 17 gelangt.

Die zweite Leitung 8 ist ebenfalls in Form eines flexiblen Schlauchs ausgestaltet und enthält ein erstes Ende 8a und ein zweites Ende 8b. Das erste Ende 8a der zweiten Leitung 8 ist mit einer Auffangvorrichtung 18 verbunden. Die Auffangvorrichtung 18 ist an dem Ende der Bohrkrone 17 positioniert und dient dazu den beim Bohrvorgang anfallenden Bohrschlamm (Gesteine, Staub und Wasser) aufzufangen. Das zweite Ende 8b der zweiten Leitung 8 ist so mit dem Bohrschlammspeicher 5 verbunden, dass der Bohrschlamm über die zweite Leitung 8 von der Auffangvorrichtung 18 in den Bohrschlammspeicher 5 gelangen kann.

Die Pumpeneinrichtung 9 enthält einen ersten Pumpenabschnitt 9a und einen zweiten Pumpenabschnitt 9b. Der erste Pumpenabschnitt 9a ist mit der ersten Leitung 7 verbunden und dient dazu, Frischwasser aus dem Wasserspeicher 4 zu der Bohrkrone 17 zu fördern bzw. zu pumpen. Der zweite Pumpenabschnitt 9b ist mit der zweiten Leitung 8 verbunden und dient dazu, Bohrschlamm aus der Auffangvorrichtung 18 in den Bohrschlammspeicher 5 zu fördern bzw. zu pumpen.
Gemäß einer alternativen Ausgestaltung ist es auch möglich, dass der erste und zweite Pumpenabschnitt 9a, 9b bzw. die Pumpe für das Frischwasser und die Pumpe für den Bohrschlamm nicht zusammen in der Pumpeneinrichtung 9 positioniert sind, sondern irgendwo an geeigneter Stelle in der Wasseraufbereitungsanlage 1.

Die Strommesseinrichtung 10 ist mit der Steuerungseinrichtung 12 sowie mit der Schnittstelle 13 zur Versorgung mit elektrischer Spannung verbunden und dient zur Messung der elektrischen Stromstärke an der Schnittstelle 13. Insbesondere kann mit der Strommesseinrichtung 10 der Stromverbrauch der Kernbohrmaschine 2 bzw. der Motorstrom der Kernbohrmaschine 2 gemessen werden, die mit der Schnittstelle verbunden ist. Über die Verbindungsleitung 19 wird die gemessene Stromstärke an die Steuerungseinrichtung 12 gesendet.

Die Wasserdruckmesseinrichtung 11 ist an dem zweiten Ende 7b der ersten Leitung 7 positioniert und dient zum Messen des Wasserdrucks in der ersten Leitung 7 sowie insbesondere zum Messen des Wasserdrucks, der an der Kernbohrmaschine 2 anliegt. Des Weiteren ist die Wasserdruckmesseinrichtung 11 mit der Steuerungseinrichtung 12 über eine Verbindungsleitung 20 zum Datenaustausch verbunden. Die Wasserdruckmesseinrichtung 11 kann dabei in Form eines Drucksensors gestaltet sein.
Gemäß einer alternativen Ausführungsform kann die Wasserdruckmesseinrichtung 11 auch an jeder anderen geeigneten Stelle an der ersten Leitung 7 positioniert sein, um den Wasserduck in der ersten Leitung 7 zu messen.

Die Steuerungseinrichtung 12 ist mit der Pumpeneinrichtung 9, der Strommesseinrichtung 10 und der Wasserdruckmesseinrichtung 11 verbunden. Die Steuerungseinrichtung 12 überwacht, steuert und regelt dabei die Pumpeneinrichtung 9 sowie den ersten Pumpenabschnitt 9a und zweiten Pumpenabschnitt 9b. Darüber hinaus empfängt die Steuerungseinrichtung 12 gemessene Daten von der Strommesseinrichtung 10 und der Wasserdruckmesseinrichtung 11.

Des Weiteren sind in der Steuerungseinrichtung 12 Schwellwerte bzw. Grenzwerte für die Strommesseinrichtung 10 und die Wasserdruckmesseinrichtung 11 gespeichert.

Wie in Fig. 1 und 2 dargestellt, können die Wasseraufbereitungsanlage 1 sowie die Kernbohrmaschine 2 in einem ersten Modus und in einem zweiten Modus betrieben werden. Fig. 1 zeigt den ersten Modus und Fig. 2 zeigt den zweiten Modus.

Schnittstelle 13 zur Versorgung mit elektrischer Spannung (z.B. Wandsteckdose) verbunden. Sowohl in dem ersten Modus als auch in dem zweiten Modus ist die Kernbohrmaschine 2 mit der ersten Leitung 7 zur Versorgung mit Frischwasser und mit der zweiten Leitung 8 zum Abtransport des Bohrschlamms verbunden.

Zum Betreiben der Wasseraufbereitungsanlage 1 in Verbindung mit der Kernbohrmaschine 2 in dem ersten Modus ist die Kernbohrmaschine 2 mit der ersten Leitung 7 und der zweiten Leitung 8 verbunden (vgl. Fig. 1). Darüber hinaus wird die Kernbohrmaschine 2 zur Versorgung mit elektrischer Spannung mit der Schnittstelle 13 der Wasseraufbereitungsanlage 2 verbunden. Vor Beginn des eigentlichen Kernbohrvorgangs werden die Kernbohrmaschine 2 sowie die Wasseraufbereitungsanlage 1 eingeschaltet. Die Wasseraufbereitungsanlage 1 befindet sich zu Beginn in einem Standby-Betrieb, d.h. die Pumpeneinrichtung 9 mitsamt dem ersten Pumpenabschnitt 9a und dem zweiten Pumpenabschnitt 9b sind eingeschaltet, fördern jedoch noch kein Frischwasser zur Bohrkrone 17 oder Bohrschlamm von der Bohrkrone 17. Erst wenn der (nicht gezeigte) Anwender den (nicht gezeigten) Motorschalter an der Kernbohrmaschine 2 betätigt und sich die Bohrkrone 17 zu drehen beginnt, wird die Pumpeneinrichtung 9 zusammen mit dem ersten Pumpenabschnitt 9a zur Förderung von Frischwasser und dem zweiten Pumpenabschnitt 9b zur Förderung von Bohrschlamm aktiviert. Wenn die Kernbohrmaschine 2 durch Betätigen des Motorschalters betrieben wird, steigt der Motorstrom der Kernbohrmaschine 2 an. Der Anstieg des Motorstroms wird an der Schnittstelle 13 der Wasseraufbereitungsanlage 1 mit Hilfe der Strommesseinrichtung 10 gemessen und an die Steuerungseinrichtung 12 gesendet. Der an der Schnittstelle 13 gemessene Stromwert wird mit den in der Steuerungseinrichtung 10 gespeicherten Schwellwerten verglichen. Wenn der gemessene Stromwert einen Schwellwert länger als eine bestimmte Zeitdauer übersteigt, wird die Pumpeneinrichtung 9 mitsamt dem ersten Pumpenabschnitt 9a und dem zweiten Pumpenabschnitt 9b eingeschaltet, damit Frischwasser zu der Bohrkrone 17 gefördert und Bohrschlamm von der Bohrkrone 17 abtransportiert wird. Wenn der Anwender den Kernbohrvorgang durch Abschalten der Kernbohrmaschine 2 (d.h. Loslassen des Motorschalters) kurzzeitig unterbricht oder auch vollständig beendet, sinkt der Motorstrom in der Kernbohrmaschine 2 entsprechend wieder ab. Dieses Absinken des Motorstroms wird an der Schnittstelle 13 der Wasseraufbereitungsanlage 1 mit Hilfe der Strommesseinrichtung 10 gemessen und an die Steuerungseinrichtung 12 gesendet. Der an der Schnittstelle 13 gemessene Stromwert wird erneut mit den in der Steuerungseinrichtung 12 gespeicherten Schwellwerten verglichen. Wenn der gemessene Stromwert einen Schwellwert länger als eine bestimmte Zeitdauer unterschreitet, wird die Pumpeneinrichtung 9 mitsamt dem ersten Pumpenabschnitt 9a und dem zweiten Pumpenabschnitt 9b ausgeschaltet, damit kein Frischwasser mehr zu der Bohrkrone 17 gefördert und kein Bohrschlamm mehr von der Bohrkrone 17 abtransportiert wird.

Hierdurch kann die Wasseraufbereitungsanlage 1 und insbesondere die Pumpeneinrichtung 9 über den Motorschalter der Kernbohrmaschine 2 kontrolliert werden, wodurch der Anwender während des Kernbohrvorgangs an der Kernbohrmaschine 2 bleiben kann und nicht zur Kontrolle der einzelnen Aggregate zwischen Kernbohrmaschine 2 und Wasseraufbereitungsanlage 1 wechseln muss. Darüber hinaus wird die Wasseraufbereitungsanlage 1 und insbesondere die Pumpeneinrichtung 9 nur aktiviert, wenn diese benötigt wird und Frischwasser zur Bohrkrone 17 gefördert und Bohrschlamm von der Bohrkrone 17 abtransportiert werden muss, wodurch Strom gespart wird.

Zum Betreiben der Wasseraufbereitungsanlage 1 in Verbindung mit der Kernbohrmaschine 2 in dem zweiten Modus ist die Kernbohrmaschine 2 mit der ersten Leitung 7 und der zweiten Leitung 8 verbunden (vgl. Fig. 2). Im Gegensatz zu dem ersten Modus wird die Kernbohrmaschine 2 zur Versorgung mit elektrischer Spannung nicht mit der Schnittstelle 13 der Wasseraufbereitungsanlage 1 verbunden, sondern mit einer externen Schnittstelle 21 zur Versorgung mit elektrischer Spannung (d.h. Wandsteckdose). Da die Kernbohrmaschine 2 nicht mit der Schnittstelle 13 der Wasseraufbereitungsanlage 1 verbunden ist, kann auch kein Anstieg des Motorstroms als Nachweis für den Betrieb der Kernbohrmaschine 2 mit Hilfe der Strommesseinrichtung 10 ermittelt werden. Mit Hilfe der Wasserdruckmesseinrichtung 1 wird der Wasserdruck gemessen, der an dem zweiten Ende 7b der ersten Leitung 7, d.h. an der Bohrkrone 17 anliegt. Vor dem eigentlichen Beginn des Kernbohrvorgangs wird das Ventil 16 an dem Verbindungsstück 15 geöffnet, sodass das Frischwasser von der ersten Leitung 7 in die Bohrkrone 17 gelangen kann. Durch das Öffnen des Ventils 16 sinkt der Druck in der ersten Leitung 7. Die Wasserdruckmesseinrichtung 11 misst den Abfall des Wasserdrucks in der ersten Leitung 7 und sendet dies über die Verbindungsleitung 20 an die Steuerungseinrichtung 12. Anhand des abgefallen Wasserdrucks in der ersten Leitung 7 wird der Steuerungseinrichtung 12 übermittelt, dass das Ventil 16 geöffnet ist und der eigentliche Kernbohrvorgang gestartet wird.

Wenn der gemessene Wasserdruck einen bestimmten Wasserdruckschwellwert länger als eine bestimmte Zeitdauer unterschreitet, sendet die Steuerungseinrichtung 12 daraufhin ein entsprechendes Signal an die Pumpeneinrichtung 9, damit diese mitsamt dem ersten Pumpenabschnitt 9a und dem zweiten Pumpenabschnitt 9b eingeschaltet wird.
Wenn der Kernbohrvorgang beendet ist oder der Kernbohrvorgang kurzzeitig unterbrochen werden soll, schließt der Anwender das Ventil 16 an dem Verbindungsstück 15, sodass kein Frischwasser mehr in die Bohrkrone 17 gelangen kann und folglich der Wasserdruck in der ersten Leitung 7 steigt. Der Anstieg des Wasserdrucks wird von der Wasserdruckmesseinrichtung 11 gemessen und an die Steuerungseinrichtung 12 übermittelt. Wenn der gemessene Wasserdruck einen bestimmten Wasserdruckschwellwert länger als eine bestimmte Zeitdauer überschreitet, sendet die Steuerungseinrichtung 12 daraufhin ein entsprechendes Signal an die Pumpeneinrichtung 9, damit diese mitsamt dem ersten Pumpenabschnitt 9a und dem zweiten Pumpenabschnitt 9b ausgeschaltet wird.

Hierdurch kann die Wasseraufbereitungsanlage 1 und insbesondere die Pumpeneinrichtung 9 über das Ventil 16 des Verbindungsstücks 15 an der Kernbohrmaschine 2 kontrolliert werden, wodurch der Anwender während des Kernbohrvorgangs an der Kernbohrmaschine 2 bleiben kann und nicht zur Kontrolle der einzelnen Aggregate zwischen Kernbohrmaschine 2 und Wasseraufbereitungsanlage 1 wechseln muss. Darüber hinaus werden die Wasseraufbereitungsanlage 1 und insbesondere die Pumpeneinrichtung 2 nur aktiviert, wenn diese benötigt wird und Frischwasser zur Bohrkrone 17 gefördert und Bohrschlamm von der Bohrkrone 17 abtransportiert werden muss, wodurch Strom gespart wird.

Die als reine Versorgungsanlage ohne Wasseraufbereitungsfunktion bzw. ohne Wasserrecyclingfunktion ausgestaltete Wasserversorgungsanlage kann auf identische Art und Weise betrieben werden wie die vorstehend beschriebene Wasserversorgungsanlage mit Wasseraufbereitungsfunktion bzw. Wasserrecyclingfunktion. Der Unterscheid besteht lediglich darin, dass bei der als reine Versorgungsanlage ohne Wasseraufbereitungsfunktion bzw. ohne Wasserrecyclingfunktion ausgestaltete Wasserversorgungsanlage der Bohrschlamm nicht über eine zweite Leitung zu der Wasserversorgungsanlage transportiert und auch nicht das im Bohrschlamm befindliche Wasser wiederverwendet wird.

## Patentansprüche

1. Verfahren zum Steuern einer Wasserversorgungsanlage (1) zur Verwendung mit einer Werkzeugmaschine (2), insbesondere einer Kernbohrmaschine, enthaltend
- ein Gehäuse (3) mit wenigstens einer Schnittstelle (13) zur Versorgung der Werkzeugmaschine (2) mit elektrischer Spannung;
- einen Wasserspeicher (4) zur Aufbewahrung von Wasser positionierbar in dem Gehäuse (3);
- wenigstens eine Leitung (7) zum Transport von Wasser aus dem Wasserspeicher (4) zu der Werkzeugmaschine (2);
- wenigstens eine Pumpeneinrichtung (9) zur Förderung von Wasser von dem Wasserspeicher (4) zu der Werkzeugmaschine (2);
- eine Strommesseinrichtung (10) zum Messen des Motorstroms an der Werkzeugmaschine (2);
- eine Wasserdruckmesseinrichtung (11) zum Messen eines Wasserdrucks in der Leitung (7); und
- eine Steuerungseinrichtung (12)
**gekennzeichnet durch** die Schritte
- Aktivierung der Pumpeneinrichtung (9) in dem Fall, dass die Werkzeugmaschine (2) mit der Schnittstelle (13) verbunden ist und der Motorstrom der Werkzeugmaschine (2) einen vorbestimmen Schwellwert übersteigt; sowie
- Deaktivierung der Pumpeneinrichtung (9) in dem Fall, dass die Werkzeugmaschine (2) mit der Schnittstelle (13) verbunden ist und der Motorstrom der Werkzeugmaschine (2) einen vorbestimmen Schwellwert unterschreitet; oder
- Aktivierung der Pumpeneinrichtung (9) in den Fall, dass die Werkzeugmaschine (2) nicht mit der Schnittstelle (13) verbunden ist und ein Wasserdruck in der Leitung (7) einen vorbestimmen Schwellwert unterschreitet; sowie
- Deaktivierung der Pumpeneinrichtung (9) in den Fall, dass die Werkzeugmaschine (2) nicht mit der Schnittstelle (13) verbunden ist und ein Wasserdruck in der Leitung (7) einen vorbestimmen Schwellwert überschreitet.

## Claims

1. Method for controlling a water supply installation (1) for use with a machine tool (2), particularly a core drilling machine, containing
- a housing (3) with at least one interface (13) for supplying the machine tool (2) with electrical voltage;
- a water reservoir (4) for storing water that may be positioned in the housing (3);
- at least one pipe (7) for transporting water from the water reservoir (4) to the machine tool (2);
- at least one pumping device (9) for conveying water from the water reservoir (4) to the machine tool (2);
- a current measuring device (10) for measuring the motor current on the machine tool (2);
- a water pressure measuring device (11) for measuring a water pressure in the pipe (7); and
- a control device (12)
**characterised by** the steps
- activating the pumping device (9) if the machine tool (2) is connected to the interface (13) and the motor current of the machine tool (2) exceeds a predetermined threshold value;
as well as
- deactivating the pumping device (9) if the machine tool (2) is connected to the interface (13) and the motor current of the machine tool (2) falls below a pre-determined threshold value; or
- activating a pumping device (9) if the machine tool (2) is not connected to the interface (13) and a water pressure in the pipe (7) falls below a pre-determined threshold value;
as well as
- deactivating the pumping device (9) if the machine tool (2) is not connected to the interface (13) and a water pressure in the pipe (7) exceeds a pre-determined threshold value.

## Revendications

1. Procédé pour commander un système d'alimentation en eau (1) destiné à être utilisé avec une machine-outil (2), en particulier une carotteuse, contenant :
- un boîtier (3) ayant au moins une interface (13) pour alimenter la machine-outil (2) avec une tension électrique,
- un réservoir d'eau (4) pour stocker de l'eau de manière repositionnable dans le boîtier (3),
- au moins une conduite (7) pour transporter l'eau du réservoir d'eau (4) à la machine-outil (2),
- au moins un dispositif de pompage (9) pour transférer l'eau du réservoir d'eau (4) à la machine-outil (2),
- un dispositif de mesure de courant (10) pour mesurer le courant de moteur sur la machine-outil (2),
- un dispositif de mesure de pression d'eau (11) pour mesurer une pression d'eau dans la conduite (7), et
- un dispositif de commande (12),
**caractérisé en ce qu'**il comporte les étapes consistant à :
- activer le dispositif de pompage (9) dans le cas où la machine-outil (2) est reliée à l'interface (13) et le courant de moteur de la machine-outil (2) dépasse une valeur seuil prédéterminée,
de même que
- désactiver le dispositif de pompage (9) dans le cas où la machine-outil (2) est reliée à l'interface (13) et le courant de moteur de la machine-outil (2) est en-dessous d'une valeur seuil prédéterminée, ou bien
- activer le dispositif de pompage (9) dans le cas où la machine-outil (2) n'est pas reliée à l'interface (13) et une pression d'eau dans la conduite (7) est en-dessous d'une valeur seuil prédéterminée,
de même que
- désactiver le dispositif de pompage (9) dans le cas où la machine-outil (2) n'est pas reliée à l'interface (13) et une pression d'eau dans la conduite (7) dépasse une valeur seuil prédéterminée.
